# FASCICULE DE BREVET EUROPEEN

(11) **EP 1 071 879 B1**
(45) Date de publication et mention de la délivrance du brevet: **19.03.2003**
(21) Numéro de dépôt: 99913382.0
(22) Date de dépôt: 12.04.1999
(51) Int. Cl.: F02M 61/18

(54) **PULVERISATEUR A JET INCLINE ET DIRIGE, POUR INJECTEUR DE MOTEUR A INJECTION DIRECTE ET ALLUMAGE COMMANDE, ET INJECTEUR EQUIPE D'UN TEL PULVERISATEUR**
SCHRÄGSTRAHLZERSTÄUBER FÜR EINSPRITZVENTIL EINER FREMDGEZÜNDETEN BRENNKRAFTMASCHINE MIT DIREKTEINSPRITZUNG
ATOMIZER WITH INCLINED AND ORIENTED JET, FOR DIRECT INJECTION AND CONTROLLED IGNITION ENGINE INJECTOR, AND INJECTOR EQUIPPED WITH SUCH AN ATOMIZER

(30) Priorité: 15.04.1998 FR 9804676
(43) Date de publication de la demande: 31.01.2001
(73) Titulaire: MAGNETI MARELLI FRANCE, 92000 Nanterre (FR)
(72) Inventeur: PONTOPPIDAN, Micha[l, 92700 Colombes (FR)
(74) Mandataire: Bérogin, Francis
(86) Numéro de dépôt international: FR9900838
(87) Numéro de publication internationale: WO99053197

(56) Documents cités:
- DE-A- 4 227 199
- US-A- 1 536 931
- US-A- 4 313 407
- US-A- 5 058 549

## Description

La présente invention concerne un pulvérisateur, pour un injecteur d'injection directe de carburant dans une chambre de combustion d'un moteur à combustion interne à allumage commandé par bougie, l'injecteur comprenant un corps dans lequel au moins un obturateur est mobile en translation par rapport à un siège correspondant dans le corps, qui présente un nez percé d'au moins un orifice de dosage de carburant, alimenté sélectivement en carburant pour permettre l'injection.

L'invention concerne également un tel injecteur d'injection directe équipé d'un pulvérisateur propre à l'invention.

Un tel injecteur est généralement du type dans lequel le ou les orifices de dosage de carburant est ou sont alimenté(s) en carburant au travers du siège du corps, lorsque l'obturateur, mobile entre une position d'appui sur le siège pour couper le passage du carburant, et une position écartée du siège pour permettre l'injection du carburant, est déplacé en position écartée du siège par des moyens d'actionnement supportés par le corps.

Le plus souvent, de tels injecteurs sont à fonctionnement par intermittence, et leurs moyens d'actionnement sont des moyens électro-magnétiques, comprenant une bobine de solénoïde, disposée dans le corps de l'injecteur, et qui commande, par l'alimentation électrique de la bobine, le déplacement de l'obturateur de la position de fermeture à la position d'ouverture du siège, à l'encontre d'au moins un ressort de rappel fermant l'injecteur par l'application de l'obturateur contre son siège, à la fin de l'alimentation électrique de la bobine.

Afin d'assurer une bonne préparation du mélange carburant-air dans la chambre de combustion, on utilise souvent des injecteurs délivrant un ou plusieurs jets de carburant formant un jet sensiblement cônique de carburant pulvérisé et projeté vers l'intérieur de la chambre de combustion. On utilise, par exemple, à cet effet un injecteur du type dit "à téton", qui comporte un téton de déviation fixé à l'obturateur et axialement engagé dans un unique orifice de dosage, sans contact avec la paroi de cet orifice et en saillie vers l'aval de cet orifice, au moins en position de fermeture de l'injecteur, l'orifice de dosage étant axial, c'est-à-dire d'axe parallèle ou confondu avec l'axe principal de l'injecteur, qui correspond à la direction de déplacement de l'obturateur par rapport au siège dans le corps.

On utilise également des injecteurs à plusieurs orifices de dosage dirigés obliquement par rapport à la direction de déplacement de l'obturateur, les axes des orifices de dosage s'étendant symétriquement autour de l'axe de l'injecteur, selon des génératrices d'une surface cônique coaxiale à l'injecteur, de sorte que les orifices de dosage provoque une dispersion du carburant suivant une nappe sensiblement cônique.

Pour obtenir le même effet, on peut encore utiliser des injecteurs du type dit "à jet rotatif".

Les injecteurs d'injection directe peuvent être implantés soit centralement, soit obliquement par rapport à l'axe de la chambre de combustion dans une partie latérale de l'évidement de la culasse délimitant cette chambre de combustion, en fonction de l'implantation de la bougie correspondante, par exemple au sommet de la chambre de combustion, entre les embouchures des tubulures d'admission et d'échappement et les soupapes correspondantes.

Dans le cas d'une implantation latérale et oblique de l'injecteur, l'utilisation d'un injecteur à jet axial, à jet rotatif ou à téton, ou à plusieurs orifices pour produire un voile cônique présente l'inconvénient qu'une partie du carburant injecté dans la chambre de combustion se dépose sur la paroi latérale de la chambre de combustion située du côté de l'injecteur, entre ce dernier et le piston correspondant.

Un montage latéral d'un tel injecteur a donc pour inconvénient que l'on ne tire pas le meilleur profit d'une partie du carburant injecté pour favoriser la meilleure combustion dans la chambre de combustion.

Par ailleurs, on connait par US-A-1,536,931 un pulvérisateur pour injecteur du typa défini ci-dessus et pour l'injection directe de carburant dans une chambre de combustion d'un moteur à combustion interne de type diesel ou semi-diesel, le pulvérisateur comprenant un dispositif d'inclinaison de jet de carburant, intégré ou rapporté au ou sur le nez de l'injecteur, et percé d'au moins trois orifices de pulvérisation débouchant à l'extérieur du dispositif et conformés et orientés de sorte à pulvériser le carburant reçu du ou des orifices de dosage de l'injecteur en au moins trois jets de carburant inclinés sur la direction de déplacement de l'obturateur dans le corps de l'injecteur avec un décalage angulaire compris entre environ 10° et environ 90°, le carburant pulvérisé étant projeté selon un flux divergeant sur une ouverture angulaire globale pouvant atteindre environ 140°, lesdits au moins trois orifices de pulvérisation projetant au moins trois jets de carburant non-adjacents, et divergeant les uns des autres d'un même côté d'un plan diamétral de l'injecteur contenant la direction de déplacement de l'obturateur.

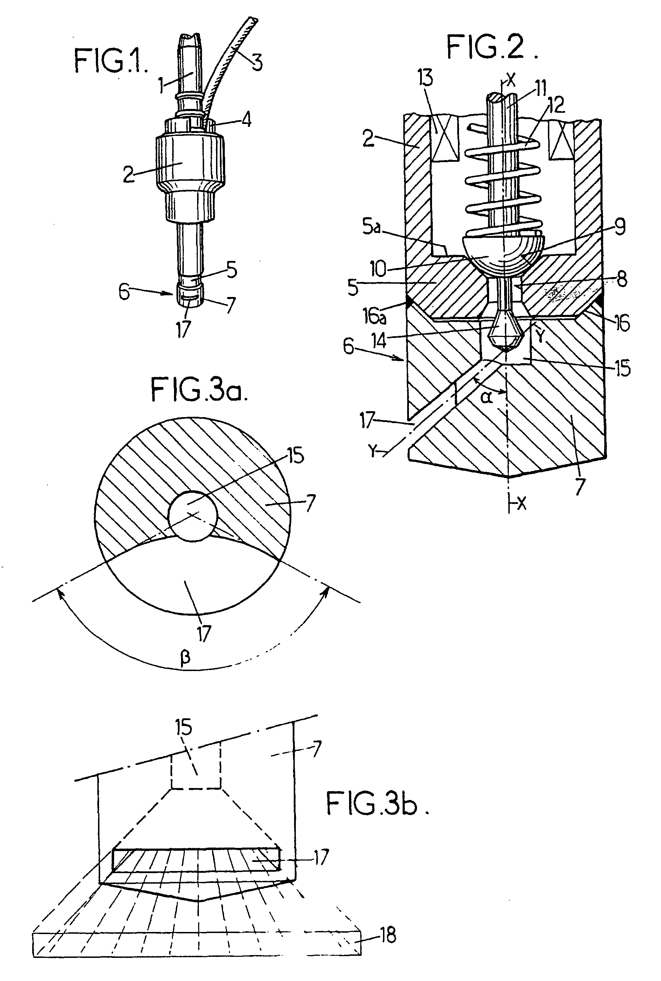

Grâce à cette inclinaison des jets de carburant pulvérisés et à l'ouverture angulaire globale de pulvérisation, l'injecteur, excentré ou implanté latéralement dans la paroi de la chambre de combustion, assure une pulvérisation inclinée sur l'axe de l'injecteur et dirigée vers la masse gazeuse dans la chambre de combustion, dans la zone de l'arc de la bougie. Toutefois, comme les orifices de pulvérisation dans US-A-1,536,931 sont une pluralité de petites fentes positionnées radialement sur un côté du pulvérisateur, dans l'exemple de la figure 2, et pulvérisant le carburant en autant de jets d'axes sensiblement coplanaires ou sur une surface sensiblement tronconique très ouverte, cette pulvérisation inclinée ne permet pas d'obtenir, dans le voisinage de l'entrefer de la bougie, un mélange carburant-air suffisamment plus riche en carburant que dans les autres zones de la chambre de combustion, pour bénéficier des meilleures conditions de combustion.

Par US-A-4,313,407, on connait également un pulvérisateur pour un injecteur du type présenté ci-dessus, convenant à l'injection directe de carburant dans une chambre de combustion d'un moteur à allumage commandé, le pulvérisateur comprenant également un dispositif d'inclinaison de jet de carburant, intégré ou rapporté au ou sur le nez de l'injecteur et percé d'un orifice de pulvérisation, débouchant à l'extérieur de ce dispositif et conformé et orienté de sorte à pulvériser le carburant reçu du ou des orifices de dosage en un jet de carburant incliné sur la direction de déplacement de l'obturateur dans le corps avec un décalage angulaire compris entre environ 10° et environ 90°, le carburant pulvérisé étant projeté selon un flux divergeant sur une ouverture angulaire globale pouvant atteindre environ 140°, l'orifice de pulvérisation étant en forme de fente s'étendant avec une orientation globale sensiblement transversale à la direction de déplacement de l'obturateur et projetant un jet de carburant en lame continue sur ladite ouverture angulaire globale.

Le but de l'invention est de remédier à cet inconvénient, et de proposer un pulvérisateur pour injecteur et un injecteur d'injection directe qui conviennent mieux aux diverses exigences de la pratique que les injecteurs et pulvérisateurs d'injecteurs connus, en particulier pour un montage latéral dans une chambre de combustion.

Un but de l'invention est d'éviter le dépôt de carburant sur la paroi de la chambre de combustion, du côté de l'injecteur, et de pulvériser et diriger tout le carburant injecté d'une manière plus favorable à une bonne combustion, pour obtenir une meilleure stratification du mélange dans la chambre de combustion et, par ce fait, réussir une combustion en mélange très pauvre assurant ainsi une baisse de la consommation spécifique, à puissance égale, où une puissance spécifique supérieure, à consommation égale.

A cet effet, lorsque le pulvérisateur selon l'invention est du type connu par US-A-1,536,931 et tel que défini ci-dessus, il se caractérise en ce que les orifices de pulvérisation sont en forme de trous cylindriques ou cylindro-coniques et répartis sur l'adaptateur selon une forme en V à pointe dirigée du côté opposé au nez d'injecteur, de sorte à projeter le carburant en plusieurs jets coniques formant sensiblement une nappe discontinue selon un dièdre en V.

De la sorte, au moins un jet vers la pointe du V est dirigé vers la zone de l'entrefer de la bougie, et au moins deux autres jets latéraux sont chacun dirigé vers l'un respectivement de deux côtés opposés de ladite chambre de combustion, le carburant étant ainsi pulvérisé en un lobe enrichi au centre, entre deux lobes latéraux plus pauvres en carburant.

Les mêmes avantages peuvent être sensiblement obtenus et avantageusement, on peut obtenir de plus une propagation homogène du jet de carburant pulvérisé dans la direction inclinée et dans l'ouverture angulaire globale proposée, lorsque le pulvérisateur selon l'invention comporte non pas au moins trois orifices disposés en V, mais est du type connu par US-A-4,313,407, avec un seul orifice de pulvérisation en forme de fente s'étendant avec une orientation globale sensiblement transversale à la direction de déplacement de l'obturateur, et projetant un jet de carburant en lame continue ou voile continu sur la dite ouverture angulaire globale, auquel cas le pulvérisateur de l'invention se caractérise en ce que la fente de pulvérisation a une forme sensiblement en V à pointe dirigée du côté opposé au nez de l'injecteur, de sorte que le jet de carburant pulvérisé est projeté en lame continue sensiblement en forme de dièdre en V, et enrichie en carburant dans sa zone centrale, orientée vers le centre de la chambre de combustion, dans la zone en regard de la bougie.

Avec une fente de pulvérisation, ou au moins trois orifices de pulvérisation, le dispositif d'inclinaison de jet du pulvérisateur peut être conformé avantageusement en capuchon se fermant sur le nez de l'injecteur, et rapporté ou solidarisé, par exemple par soudage laser, après un centrage conique. De plus, le décalage angulaire précité est de préférence compris entre environ 50° et environ 60°.

L'invention a également pour objet un injecteur d'injection directe, du type présenté ci-dessus, et par exemple à téton d'injection ou à jet rotatif, et équipé d'un pulvérisateur propre à l'invention et tel que défini ci-dessus, dont le dispositif d'inclinaison de jet est solidaire du nez de l'injecteur.

D'autres avantages et caractéristiques de l'invention ressortiront de la description donnée ci-dessous à titre non limitatif, d'exemples de réalisation décrits en référence aux dessins annexés sur lesquels:
- la figure 1 est une vue schématique en élévation latérale d'un injecteur d'injection directe, notamment d'essence, dans un moteur à allumage commandé par bougie,
- la figure 2 est une vue partielle en coupe axiale de l'injecteur de la figure 1 au niveau du pulvérisateur à fente recouvrant son nez,
- les figures 3a et 3b sont des vues partielles schématiques respectivement en coupe oblique et en élévation latérale du pulvérisateur de l'injecteur des figures 1 et 2,
- la figure 4 est une vue analogue à la figure 3b pour un pulvérisateur avec fente en V,
- la figure 5 est une vue analogue à la figure 3b pour un pulvérisateur à plusieurs orifices de pulvérisation, d'axes coplanaires, et
- la figure 6 est une vue analogue à la figure 5 lorsque les orifices de pulvérisation sont répartis en V sur le pulvérisateur.

Les variantes des figures 3b et 5 ne sont pas couvertes par les revendications indépendantes 1 et 2.

La figure 1 représente schématiquement un injecteur pour injection directe de carburant dans une chambre de combustion d'un moteur à allumage commandé par bougie. L'injecteur est du type electro-magnétique à fonctionnement par intermittence, et comprend une arrivée tubulaire de carburant 1 débouchant dans un corps 2, qui est tubulaire et loge notamment une bobine de solénoïde alimentée en courant électrique par un conducteur électrique 3 relié à l'injecteur par un connecteur électrique schématisé en 4. Le corps 2 loge également un équipage mobile s'étendant jusqu'au nez 5 de l'injecteur, sensiblement dans le prolongement de l'arrivée de carburant 1, mais du côté opposé du corps 2, par rapport à cette arrivée 1. L'injecteur est équipé d'un pulvérisateur 6, comprenant un dispositif d'inclinaison de jet conformé en adaptateur 7, et agencé en capuchon fermé sur le nez 5 et solidaire du corps 2.

Comme représenté schématiquement sur la figure 2, le nez 5 est percé d'un unique orifice de dosage 8, cylindrique et axial, centré sur l'axe principal X-X de l'injecteur. Cet orifice 8, pour le passage d'un jet d'essence sous pression venant de l'intérieur du corps 2, se raccorde à la face plane 5a tournée vers l'intérieur du nez 5 par un siège troncônique 9, contre lequel est appliqué, en position de fermeture de l'injecteur, un obturateur 10, dans cet exemple en forme de calote sphérique, solidaire de l'extrémité inférieure d'un plongeur 11 de l'équipage mobile du corps 2 de l'injecteur, cet obturateur 10 étant repoussé vers son siège 9 par un ressort de compression 12 prenant appui dans le corps 2 de l'injecteur. Lorsque la bobine 13 d'injecteur est alimentée, le plongeur 11 et l'obturateur 10 sont déplacés selon l'axe X-X vers l'intérieur du corps 2, à l'encontre du ressort 12 qui est comprimé, de sorte à écarter l'obturateur 10 de son siège 9 et à permettre le passage d'essence contenue dans le corps 2 par l'orifice de dosage 8.

Sur la figure 2, l'injecteur représenté est du type dit "à téton", dont l'obturateur 10 est prologé axialement (selon l'axe X-X de symétrie de l'injecteur) par un téton de déviation 14, qui est ainsi axialement disposé dans l'orifice de dosage 8 sans contact avec sa paroi et fait saillie axialement au-delà de la sortie de cet orifice 8. Le téton 14, fixé à l'obturateur 10, se déplace avec ce dernier dans ses mouvements de va-et-vient axiaux, à l'ouverture et à la fermeture de l'injecteur. Ce téton 14 présente, à l'extrémité d'une petite tige cylindrique, un partie tronconique divergeante vers l'aval prolongée par une partie conique convergente, par rapport au sens de passage du carburant, et de sorte à délimiter avec l'orifice 8 un passage annulaire qui procure un effet de projection de carburant en cône creux vers l'intérieur d'un évidement central cylindrique 15 ménagé axialement dans la face supèrieure de l'adaptateur 7, qui est tournée vers le nez 5. Cet évidement 15 est entouré sur l'adaptateur 7 d'une portée tronconique 16 de centrage contre une portée tronconique en regard sur la face externe du nez 5, pour le centrage de l'adaptateur 7 sur le nez 5 avant solidarisation de ces deux éléments l'un à l'autre par un soudage laser indiqué en 16a.

En variante, l'adaptateur 7 peut également être rapporté, par tout autre moyen de positionnement précis connu, sur le nez 5.

Pour l'injection directe du carburant parvenu dans l'évidement central 15 de l'adaptateur 7, ce carburant est projeté par un unique orifice de pulvérisation 17, raccordant l'évidement 15 à la paroi latérale de l'adaptateur 7 dans laquelle cet orifice 17 débouche.

Dans cet exemple, cet orifice de pulvérisation 17 est une fente droite de section transversale de forme rectangulaire, dont la longueur est orientée sensiblement perpendiculairement à l'axe principal X-X de l'injecteur. Cette fente de pulvérisation 17 est légèrement divergeante vers l'aval, c'est-à-dire que sa section transversale augmente progressivement de l'évidement 15 jusqu'à son ouverture dans la paroi latérale. Les parois supérieure et inférieure de la fente 17 s'écartent légèrement et progressivement l'une de l'autre (voir figure 2) et le plan médian de cette fente 17 est incliné selon la direction Y-Y d'un angle α compris entre environ 10° et environ 90°, et préférentiellement entre environ 50° et environ 60°, sur l'axe X-X des déplacements de l'équipage mobile de l'injecteur.

De plus, et latéralement dans son plan médian Y-Y, la fente 17 diverge avec une ouverture angulaire globale β comprise entre environ 120° et environ 140°, comme représenté sur les figures 3a et 3b.

Cette conformation et orientation de la fente droite 17 permet de projeter le carburant reçu dans l'évidement central 15 et provenant de l'orifice de dosage 8 en un jet de carburant pulvérisé en forme de lame plane ou voile plan continu(e), schématiquement représentée en 18 sur la figure 3b, et incliné sur la direction X-X de déplacement de l'obturateur 10 dans le corps 2 de l'injecteur avec le décalage angulaire α, le carburant pulvérisé étant de plus projeté avec une propagation homogène en un flux divergeant sur l'ouverture angulaire globale précitée.

Ainsi, lorsque l'injecteur est implanté latéralement dans la paroi d'une chambre de combustion avec son axe X-X incliné sur l'axe du cylindre correspondant, l'inclinaison α du jet de carburant pulvérisé et l'ouverture angulaire globale β de pulvérisation permettent au pulvérisateur 6 d'assurer une pulvérisation inclinée par rapport à l'axe X-X de l'injecteur et dirigée vers la masse gazeuse dans la partie centrale de la chambre de combustion, dans la zone de l'arc de la bougie correspondante.

Cette pulvérisation inclinée et dirigée en nappe continue permet d'éviter le dépôt de carburant sur la paroi de la chambre de combustion et d'obtenir un mélange air-carburant plus riche en carburant dans le volume central de la chambre de combustion, alimenté par la partie centrale de la nappe, que sur les côtés de cette chambre, alimentés par les parties latérales de la nappe de carburant.

A titre d'exemple, la largeur de la fente 17 peut être de 0,9 mm et sa longueur d'environ 7 mm au niveau de son embouchure dans la face latérale de l'adaptateur 7. Avec une pression d'alimentation en carburant de 12 MPa, on obtient, grâce à cet injecteur, une vitesse moyenne de pénétration du carburant d'environ 40 m/s dans la masse gazeuse au repos, à une température ambiante de 23°C et à la pression atmosphérique dans la chambre de combustion, alors que cette vitesse moyenne de pénétration serait d'environ 100 m/s pour un injecteur à téton et d'environ 70 m/s pour un injecteur à jet rotatif de l'état de la technique, utilisé comme injecteur d'injection directe. Cette plus faible vitesse moyenne de pénétration a pour conséquence que le jet de carburant pulvérisé incliné et dirigé vient moins percuter la paroi de la chambre de combustion du côté opposé à l'injecteur, ce qui diminue d'avantage encore les risques de dépôt de carburant en film liquide sur la paroi de la chambre de combustion.

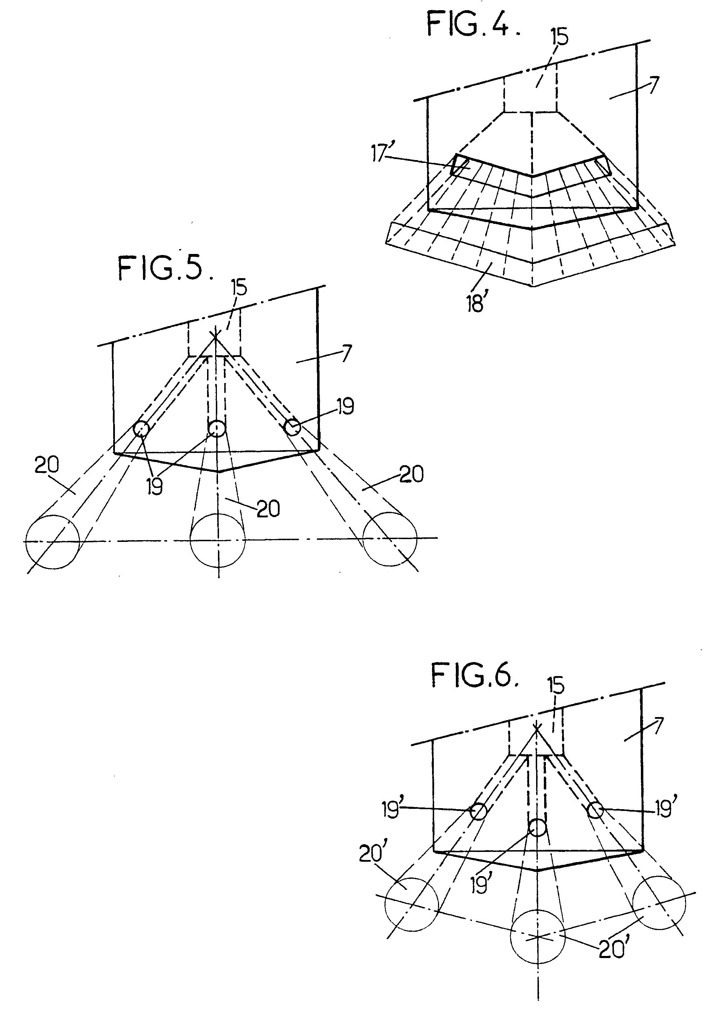

La figure 4 représente une variante dans laquelle l'unique fente de pulvérisation 17' n'est plus droite mais en forme de V, dont l'orientation générale reste transversale par rapport à l'axe principal X-X de l'injecteur, et dont la pointe du V est dirigée vers l'intérieur de la chambre de combustion, c'est-à-dire du côté opposé au nez 5, de sorte que le voile de carburant pulvérisé est toujours un voile continu, mais n'est plus un voile plan mais au contraire un voile 18' en forme de dièdre en V.

Cette variante est avantageuse en ce qu'elle permet d'obtenir un mélange air-carburant encore plus riche en carburant dans la zone de l'arc de la bougie que dans les deux parties latérales opposées de la chambre de combustion.

Un autre intérêt de la fente de pulvérisation 17' en V à pointe dirigée vers la chambre de combustion est que la pulvérisation ainsi obtenue convient mieux à un moteur équipé de pistons à profil actif en surface délimitant les chambres de combustion, car cette projection du carburant selon un voile continu et homogène en dièdre en V favorise le rebond du carburant de la zone centrale du voile sur le relief du piston.

Dans la réalisation de la figure 5, le pulvérisateur comprend trois orifices de pulvérisation 19, débouchant chacun, d'une part, dans l'évidement central 15 et, d'autre part, dans la face latérale de l'adaptateur 7. Ces orifices 19 sont des trous cylindriques, ou légèrement côniques divergeants de l'intérieur vers l'extérieur, ou encore cylindro-coniques, qui ont leurs axes sensiblement contenus dans un même plan, incliné, comme le plan Y-Y de la figure 2, d'un angle α compris entre environ 10° et environ 90°, et de préférence entre environ 50° et environ 60°, sur l'axe principal X-X de l'injecteur, les axes des trois orifices 19 étant de plus concourants au point d'intersection de leur plan avec l'axe X-X, dans l'évidement 15. Par chacun de ces trois orifices 19, le carburant est projeté et pulvérisé en un voile conique 20, et l'angle entre l'axe de l'orifice central 19 et l'axe de chacun des deux orifices latéraux 19 est d'environ 60°, de sorte que les trois jets coniques 20 ne sont pas contigus et, ensemble, constituent une nappe discontinue dont le jet central 20, de préférence d'une section supérieure à celle des deux autres grâce à un orifice central 19 de plus grande section que les orifices latéraux 19 pour une alimentation centrale plus riche en carburant, est dirigé vers la zone centrale de la chambre de combustion, en regard de la bougie, tandis que chacun des deux jets latéraux 20 est dirigé vers l'une respectivement des deux zones latérales opposées de la chambre de combustion. La nappe discontinue de carburant pulvérisé ainsi projetée avec inclinaison dans la chambre de combustion s'étend également sur une ouverture angulaire globale de l'ordre de 140°. Ces orifices de pulvérisation 19 forment ainsi un faisceau divergeant de jets coniques 20 de carburant pulvérisé d'axes sensiblement coplanaires. On obtient ainsi sensiblement les mêmes avantages qu'avec la réalisation des figures 2 , 3a et 3b, le carburant étant pulvérisé en un lobe enrichi au centre (jet central) entre deux lobes latéraux plus pauvres en carburant, en particulier si l'orifice central 19 a un diamètre légèrement supérieur à celui des orifices latèraux, qui est par exemple de l'ordre de 2 mm.

Pour obtenir sensiblement les mêmes avantages que la variante de la figure 4, avec fente en V , il est possible, comme représenté schématiquement sur la figure 6, de percer les trois orifices de pulvérisation 19' dans l'adaptateur de sorte qu'ils forment sur ce dernier un V, dont la pointe correspond à l'orifice 19' central qui est ainsi davantage incliné sur l'axe X-X de l'injecteur que les deux orifices 19' latéraux. Toutefois, les inclinaisons de l'orifice central comme des orifices latéraux 19' restent comprises dans la plage angulaire s'étendant d'environ 10° à environ 90°. De même, les axes longitudinaux des orifices 19' restent concourants en un même point sur l'axe X-X, sensiblement au fond de l'évidement central 15 de l'adaptateur 7. Les trois jets coniques 20' de carburant pulvérisé qui sortent des orifices 19' forment ainsi une nappe ou un voile discontinu(e) en dièdre du fait de la disposition en V des orifices 19' et des trois jets 20' non adjacents.

En faisant varier le nombre, la géométrie et la disposition des orifices de pulvérisation, le pulvérisateur de l'invention présente une très grande capacité d'adaptation au champ aérodynamique de la chambre de combustion considérée. On obtient ainsi plus aisément un voile de pulvérisation ou vaporisation stoechiométrique à l'endroit approprié dans la chambre de combustion.

Le pulvérisateur 6 décrit ci-dessus coopère avec un injecteur à téton mais, bien entendu, ce pulvérisateur peut être monté sur un injecteur d'un autre type, en particulier un injecteur à jet rotatif.

## Revendications

1. Pulvérisateur, pour injecteur d'injection directe de carburant dans une chambre de combustion d'un moteur à combustion interne à allumage commandé par bougie, l'injecteur étant du type comprenant un corps (2) dans lequel au moins un obturateur (10) est mobile en translation par rapport à un siège (9) correspondant dans le corps (2)qui présente un nez (5) percé d'au moins un orifice (8) de dosage de carburant, alimenté selectivement en carburant pour l'injection de ce dernier, le pulvérisateur (6) comprenant un dispositif (7) d'inclinaison de jet de carburant, intégré ou rapporté au ou sur le nez (5) de l'injecteur et percé d'au moins trois orifices de pulvérisation (19') débouchant à l'extérieur de ce dispositif (7) et conformés et orientés de sorte à pulvériser le carburant reçu du ou des orifices de dosage (8) en au moins trois jets de carburant (20') inclinés sur la direction de déplacement (X-X) de l'obturateur (10) dans le corps (2) avec un décalage angulaire compris entre environ 10° et environ 90°, le carburant pulvérisé étant projeté selon un flux divergeant sur une ouverture angulaire globale pouvant atteindre environ 140°, lesdits au moins trois orifices (19') de pulvérisation projetant au moins trois jets de carburant (20') non-adjacents, et divergeant les uns des autres d'un même côté d'un plan diamétral de l'injecteur contenant la direction de déplacement (X-X) de l'obturateur (10), **caractérisé en ce que** lesdits orifices de pulvérisation (19') sont en forme de trous cylindriques ou cylindro-coniques et répartis sur l'adaptateur (7) selon une forme en V à pointe dirigée du côté opposé au nez (5) d'injecteur, de sorte à projeter le carburant en plusieurs jets (20') coniques formant sensiblement une nappe discontinue selon un dièdre en V.

2. Pulvérisateur, pour injecteur d'injection directe de carburant dans une chambre de combustion d'un moteur à combustion interne à allumage commandé par bougie, l'injecteur étant du type comprenant un corps (2) dans lequel au moins un obturateur (10) est mobile en translation par rapport à un siège (9) correspondant dans le corps (2) qui présente un nez (5) percé d'au moins un orifice (8) de dosage de carburant, alimenté sélectivement en carburant pour l'injection de ce dernier, le pulvérisateur (6) comprenant un dispositif (7) d'inclinaison de jet de carburant, intégré ou rapporté au ou sur le nez (5) de l'injecteur et percé d'un orifice de pulvérisation (17') débouchant à l'extérieur de ce dispositif (7) et conformé et orienté de sorte à pulvériser le carburant reçu du ou des orifices de dosage (8) en un jet de carburant (18') incliné sur la direction de déplacement (X-X) de l'obturateur (10) dans le corps (2) avec un décalage angulaire compris entre environ 10° et environ 90°, le carburant pulvérisé étant projeté selon un flux divergeant sur une ouverture angulaire globale pouvant atteindre environ 140°, l'orifice de pulvérisation étant en forme de fente (17') s'étendant avec une orientation globale sensiblement transversale à la direction de déplacement (X-X) de l'obturateur (10) et projetant un jet de carburant (18') en lame continue sur ladite ouverture angulaire globale, **caractérisé en ce que** la fente de pulvérisation (17') a une forme sensiblement en V à pointe dirigée du côté opposé au nez (5) d'injecteur, de sorte que le jet de carburant est projeté en lame continue (18') sensiblement en forme de dièdre en V, et enrichie en carburant dans sa zone centrale.

3. Pulvérisateur selon l'une quelconque des revendications 1 et 2, **caractérisé en ce que** le dispositif (7) d'inclinaison de jet est conformé en capuchon se fermant sur le nez (5) de l'injecteur.

4. Pulvérisateur selon l'une quelconque des revendications 1 à 3, **caractérisé en ce que** ledit décalage angulaire est compris entre environ 50° et environ 60°.

5. Injecteur d'injection directe de carburant dans une chambre de combustion d'un moteur à combustion interne à allumage commandé par bougie, et comprenant un corps (2) présentant un nez (5) percé d'au moins un orifice (8) de dosage de carburant alimenté au travers d'un siège (9) du corps (2), lorsqu'un obturateur (10) mobile dans le corps (2) entre une position d'appui sur le siège (9), pour couper le passage du carburant, et une position écartée du siège (9), pour permettre l'injection de carburant, est déplacé en position écartée du siège (9) par des moyens d'actionnement (13) supportés par le corps (2), **caractérisé en ce qu'**il comprend également un pulvérisateur (6) selon l'une quelconque des revendications 1 à 4 précédentes, dont le dispositif (7) d'inclinaison de jet est solidaire du nez (5) de l'injecteur.

6. Injecteur selon la revendication 5, **caractérisé en ce que** son nez (5) est percé d'un unique orifice de dosage (8), et **en ce qu'**il comporte un téton de déviation (14), fixé à l'obturateur (10) et axialement engagé dans ledit orifice de dosage (B), sans contact avec la paroi dudit orifice (8) et en saillie vers l'aval dudit orifice (8), au moins en position de fermeture de l'obturateur (10).

7. Injecteur selon la revendication 5, **caractérisé en ce qu'**il est du type dit "à jet rotatif".

## Patentansprüche

1. Zerstäuber für Einspritzdüsen zur Direkteinspritzung von Treibstoff in eine Verbrennungskammer eines Verbrennungsmotors mit zündkerzengesteuerter Zündung, wobei die Einspritzdüse derart ist, dass sie einen Körper (2) enthält, in welchem wenigstens ein Verschluss (10) in Bezug auf einen entsprechenden Sitz (9) im Körper (2) längsbeweglich ist, der eine Nase (5) aufweist, die von wenigstens einer Treibstoffdosierungsöffnung (8) durchbohrt ist, die selektiv mit Treibstoff zur Einspritzung dieses letzteren gespeist wird, wobei der Zerstäuber (6) eine Vorrichtung (7) zur Schrägstellung des Treibstoffstrahls umfasst, die an oder auf der Nase (5) der Einspritzdüse integriert oder angesetzt und von wenigstens drei Zerstäubungsöffnungen (19') durchbohrt ist, die außerhalb dieser Vorrichtung (7) münden und so geformt und ausgerichtet sind, dass der von der oder den Dosierungsöffnungen (8) empfangene Treibstoff in wenigstens drei Treibstoffstrahlen (20') zerstäubt wird, die gegenüber der Bewegungsrichtung (X-X) des Verschlusses (10) im Körper (2) mit einem Winkelunterschied zwischen etwa 10° und etwa 90° schräg verlaufen, wobei der zerstäubte Treibstoff entsprechend einem divergierenden Strom über eine Gesamtwinkelöffnung herausgeschleudert wird, die etwa 140° erreichen kann, wobei die genannten wenigstens drei Zerstäubungsöffnungen (19') wenigstens drei Treibstoffstrahlen (20') herausschleudern, die nicht aneinander angrenzen und voneinander auf der gleichen Seite einer die Bewegungsrichtung (X-X) des Verschlusses (10) enthaltenden Durchmesserebene der Einspritzdüse divergieren, **dadurch gekennzeichnet, dass** die Zerstäubungsöffnungen (19') die Form zylindrischer oder zylinderkonischer Löcher haben und über das Vorsatzstück (7) entsprechend der Form eines V mit einer Spitze verteilt sind, die zu der der Nase (5) der Einspritzdüse gegenüberliegenden Seite hin gerichtet ist, so dass der Treibstoff in mehreren konischen Strahlen (20') herausgeschleudert wird, die im wesentlichen eine diskontinuierliche Matte entsprechend einem V-Dieder bilden.

2. Zerstäuber für Einspritzdüsen zur Direkteinspritzung von Treibstoff in eine Verbrennungskammer eines Verbrennungsmotors mit zündkerzengesteuerter Zündung, wobei die Einspritzdüse derart ist, dass sie einen Körper (2) enthält, in welchem wenigstens ein Verschluss (10) in Bezug auf einen entsprechenden Sitz (9) im Körper (2) längsbeweglich ist, der eine Nase (5) aufweist, die von wenigstens einer Treibstoffdosierungsöffnung (8) durchbohrt ist, die selektiv mit Treibstoff zur Einspritzung dieses letzteren gespeist wird, wobei der Zerstäuber (6) eine Vorrichtung (7) zur Schrägstellung des Treibstoffstrahls umfasst, die an oder auf der Nase (5) der Einspritzdüse integriert oder angesetzt und von einer Zerstäubungsöffnung (17') durchbohrt ist, die außerhalb dieser Vorrichtung (7) mündet und so geformt und ausgerichtet ist, dass der von der oder den Dosierungsöffnungen (8) empfangene Treibstoff in einem Treibstoffstrahl (18') zerstäubt wird, der gegenüber der Bewegungsrichtung (X-X) des Verschlusses (10) im Körper (2) mit einem Winkelunterschied zwischen etwa 10° und etwa 90° schräg verläuft, wobei der zerstäubte Treibstoff entsprechend einem divergierenden Strom über eine Gesamtwinkelöffnung herausgeschleudert wird, die etwa 140° erreichen kann, wobei die Zerstäubungsöffnung die Form eines Schlitzes (17') hat, der sich in seiner Gesamtausrichtung im wesentlichen quer zur Bewegungsrichtung (X-X) des Verschlusses (10) erstreckt und einen Treibstoffstrahl (18') als durchgehendes Blatt über die genannte Gesamtwinkelöffnung herausschleudert,
**dadurch gekennzeichnet, dass** der Zerstäubungsschlitz (17') im wesentlichen die Form eines V mit einer Spitze hat, die zu der der Nase (5) der Einspritzdüse gegenüberliegenden Seite hin gerichtet ist, so dass der Treibstoffstrahl als durchgehendes Blatt (18') herausgeschleudert wird, das im wesentlichen die Form eines V-Dieders hat und in seiner Mittelzone treibstoffangereichert ist.

3. Zerstäuber nach einem der Ansprüche 1 und 2, **dadurch gekennzeichnet, dass** die Vorrichtung (7) zur Strahlschrägstellung als Kappe geformt ist, die sich über der Nase (5) der Einspritzdüse schließt.

4. Zerstäuber nach einem der Ansprüche 1 bis 3, **dadurch gekennzeichnet, dass** der genannte Winkelunterschied zwischen etwa 50° und etwa 60° liegt.

5. Einspritzdüse, die zur Direkteinspritzung von Kraftstoff in eine Verbrennungskammer eines Verbrennungsmotors mit zündkerzengesteuerter Zündung vorgesehen ist und einen Körper (2) umfasst, der eine Nase (5) aufweist, die von wenigstens einer Treibstoffdosierungsöffnung (8) durchbohrt ist, die über einen Sitz (9) des Körpers (2) gespeist wird, wenn ein Verschluss (10), der im Körper (2) zwischen einer Abstützposition am Sitz (9), um den Durchgang des Treibstoffs abzuschalten, und einer vom Sitz (9) abgehobenen Position, um die Treibstoffeinspritzung zu ermöglichen, beweglich ist, in die vom Sitz (9) abgehobene Position durch vom Körper (2) getragene Betätigungsmittel (13) verschoben ist, **dadurch gekennzeichnet, dass** sie auch einen Zerstäuber (6) nach einem der vorhergehenden Ansprüche 1 bis 4 umfasst, dessen Vorrichtung (7) zur Strahlschrägstellung mit der Nase (5) der Einspritzdüse fest verbunden ist.

6. Einspritzdüse nach Anspruch 5, **dadurch gekennzeichnet, dass** ihre Nase (5) von einer einzigen Dosierungsöffnung (8) durchbohrt ist und dass sie einen Ablenkungsansatz (14) enthält, der am Verschluss (10) befestigt und axial in der Dosierungsöffnung (8) eingeführt ist und zwar ohne Berührung mit der Wand dieser Öffnung (8) und strömungsabwärts in dieser Öffnung (8) vorstehend, zumindest in Schließposition des Verschlusses (10).

7. Einspritzdüse nach Anspruch 5, **dadurch gekennzeichnet, dass** sie vom sogenannten "Rotationsstrahl"-Typ ist.

## Claims

1. Atomizer for direct injection and controlled ignition engine injector wherein the injector is of the type comprising a body (2) in which at least one obturator (10) is mobile in translation in relation to a corresponding seat (9) in the body (2) which has a nose (5) pierced by at least one opening (8) for dosing fuel, supplied selectively with fuel for the injection of the latter, wherein the atomizer (6) comprises a fuel jet inclination device (7) which is integrated or joined to or onto the nose (5) of the injector and pierced by at least three atomization openings (19') which open onto the exterior of this device (7) and are conform and oriented in such a way as to atomize the fuel received from the dosing opening or openings (8) in at least three fuel jets (20') inclined onto the direction of movement (X-X) of the obturator (10) in the body (2) with an angular displacement between around 10° and around 90° wherein the atomized fuel is projected according to a diverging flux onto a global angular opening which can reach around 140° wherein the said at least three atomization openings (19') project at least three non-adjacent fuel jets (20') and diverge them from one another from one same side of a diametrical plane of the injector containing the direction of movement (X-X) of the obturator (10),
**characterised in that** the said atomization openings (19') are in the form of cylindrical or cylindro-conical holes and are distributed on the adaptor (7) according to a V shape pointing towards from the side opposite to the injector nose (5) in such a way as to project the fuel in several conical jets (20') more or less forming a discontinuous sheet according to a V shaped dihedral.

2. Atomizer for direct injection and controlled ignition engine injector wherein the injector is of the type comprising a body (2) in which at least one obturator (10) is mobile in translation in relation to a corresponding seat (9) in the body (2) which has a nose (5) pierced by at least one opening (8) for dosing fuel, supplied selectively with fuel for the injection of the latter, wherein the atomizer (6) comprises a fuel jet inclination device (7) which is integrated or joined to or onto the nose (5) of the injector and pierced by an atomization opening (17') which opens onto the exterior of this device (7) and is conform and oriented in such a way as to atomize the fuel received from the dosing opening or openings (8) in a fuel jet (18') inclined onto the direction of movement (X-X) of the obturator (10) in the body (2) with an angular displacement between around 10° and around 90° wherein the atomized fuel is projected according to a diverging flux onto a global angular opening which can reach around 140° wherein the atomization opening is in the form of a slot (17') which extends with a global orientation which is substantially transversal to the direction of movement (X-X) of the obturator (10 ) and projects a fuel jet (18') on a continuous strip on the said global angular opening, **characterised in that** the atomization slot (17') has an substantially V shape pointing towards the side opposite to the injector nose (5) in such a way that the fuel jet is projected on a continuous strip (18') substantially in the form of a V shaped dihedral and enriched in fuel in its central zone.

3. Atomizer according to one of the claims 1 and 2 **characterised in that** the jet inclination device (7) is conform to a hood which closes on the injector nose (5).

4. Atomizer according to one of the claims 1 to 3 **characterised in that** the said angular displacement is between around 50°and around 60°.

5. Direct injection and controlled ignition engine injector, comprising a body (2) which has a nose (5) which is pierced by at least one opening (8) for dosing fuel supplied by means of a seat (9) of the body (2), when an obturator (10) mobile in the body (2) between position of resting on the seat (9) in order to cut off the passage of the fuel and a position at a distance from the seat (9) in order to facilitate the injection of fuel, is moved into a position at a distance from the seat (9) by actuating means (13) supported by the body (2), **characterised in that** it also comprises an atomizer (6) according to one of the preceding claims 1 to 4, of which the jet inclination device (7) forms part of the injector nose (5).

6. Injector according to claim 5 **characterised in that** its nose (5) is pierced by a single dosing opening (8) and **in that** it comprises a deviation pin (14) which is fixed to the obturator (10) and axially engaged in the said dosing opening (8) without contact with the wall of the said opening (8) and projecting towards the downward area of the said opening (8), at least in a position of closure of the obturator (10).

7. Injector according to claim 5 **characterised in that** it is of the so-called "rotating jet" type.
